# EUROPEAN PATENT SPECIFICATION

(11) **EP 1 105 201 B1**
(45) Date of publication and mention of the grant of the patent: **10.01.2007**
(21) Application number: 99946615.4
(22) Date of filing: 24.08.1999
(51) Int. Cl.: B01D 39/20

(54) **METHOD FOR FORMING POROUS STRUCTURES**
VERFAHREN UM PORÖSE ANORGANISCHE STRUKTUREN ZU BILDEN
PROCEDES POUR FORMER DES STRUCTURES POREUSES

(30) Priority: 24.08.1998 US 97687 P
(43) Date of publication of application: 13.06.2001
(60) Divisional application: 06018982.6
(73) Proprietor: PALL CORPORATION, East Hills, NY 11548-1209 (US)
(72) Inventor: LOVE, Charles, Syracuse, NY 13215 (US); REKCZIS, Keith, Cortland, NY 13045 (US); HOPKINS, Scott, Dryden, NY 13053 (US)
(74) Representative: Knott, Stephen Gilbert
(86) International application number: PCT/US1999/019153
(87) International publication number: WO 2000/010685

(56) References cited:
- EP-A- 0 764 456
- US-A- 5 660 863
- PATENT ABSTRACTS OF JAPAN vol. 15, no. 396, 8 October 1991 (1991-10-08) & JP 03 162503 A (ISHIKAWAJIMA), 12 July 1991 (1991-07-12)
- PATENT ABSTRACTS OF JAPAN vol. 17, no. 377, 15 July 1993 (1993-07-15) & JP 05 064804 A (SINTOKOGIO), 19 March 1993 (1993-03-19)
- PATENT ABSTRACTS OF JAPAN vol. 17, no. 334, 24 June 1993 (1993-06-24) & JP 05 038098 A (SUMITOMO ELECTRIC IND), 12 February 1993 (1993-02-12)
- PATENT ABSTRACTS OF JAPAN vol. 19, no. 502, 31 March 1995 (1995-03-31) & JP 06 327920 A (TOTOKU ELECTRIC CO), 29 November 1994 (1994-11-29)
- PATENT ABSTRACTS OF JAPAN vol. 13, no. 115, 20 March 1989 (1989-03-20) & JP 63 288973 A (ISHIKAWAJIMA HARIMA HEAVY IND ), 25 November 1988 (1988-11-25)
- PATENT ABSTRACTS OF JAPAN vol. 13, no. 255, 13 June 1989 (1989-06-13) & JP 01 058305 A (IBIDEN CO), 6 March 1989 (1989-03-06)

## Description

### Background of the Invention

Inorganic filters have a number of advantages over other types of filters, such as polymeric filters. Since inorganic materials such as metals are generally more heat and chemical resistant than organic materials such as polymers, inorganic filter media can be used in applications where polymeric filter media cannot be used. For example, a metal filter can be used to separate fine catalytic particles from a hot gaseous stream or separate contaminants from a hot stream of polymeric liquid. On the other hand, many polymer-based filter media will degrade from the heat of such hot fluid streams. In addition, inorganic filters can be more cost effective than polymeric filters. For example, inorganic filters can be reused in applications where polymeric filters cannot. A metallic filter medium can be sterilized and reused after filtering fluids, such as biological fluids. In contrast, many polymeric filters cannot be sterilized for reuse, because most polymers are not suitable for high temperature sterilization. Lastly, inorganic filters can be used to filter high pressure fluid streams. Inorganic filters generally have greater structural stability than polymeric filters.

Inorganic filter media, especially metallic filter media, have frequently been used as "point of use filters". Such filters can be used to filter process fluids, e.g., fluids such as etchants used to process articles) and are typically used upstream of the processed article. In semiconductor manufacturing processes, highly pure fluids such as silane are used. If these process fluids are not highly pure at the point of use, contaminants in the process fluids can deposit onto a semiconductor or semiconductor precursor and damage it (e.g., by causing a defective circuit). Damaged semiconductors are typically reworked or discarded as scrap.

Organic filter media have been described as effective for removing particulate contaminants from process fluids. However, organic filter media can unfavorably exhibit particle shedding, organic desorption (e.g., outgassing or leaching of extractables), clogging, thermal degradation and chemical degradation. Point of use filters incorporating some metallic filter media have alleviated some of these problems. However, conventional metallic filter media also have disadvantages including poor contaminant retention properties, low voids volumes, low ductility, and/or a high pressure drop. Further, some conventional methods of manufacturing inorganic filter media are difficult, inconvenient, and expensive.

Air laying is one conventional process of forming a porous metallic filter medium. In this process, metallic powder falls under the influence of gravity into a mold. If the desired filter medium and the corresponding molding apparatus are large, the powder must be dispensed from high above the mold. Once in the mold, the powder is "fluffed up" and then compressed. The compressed powder is then sintered together to form a metal filter medium.

Conventional air-laying processes have a number of disadvantages. First, conventional air-laying processes are likely to be incapable of producing a uniformly porous medium, especial a uniformly porous non-planar filter medium. For example, a seamless filter medium with horizontal and vertical portions could be formed from a mold having corresponding horizontal and vertical surfaces. While air-laid metallic powder might be able to deposit uniformly on the horizontal surface of the mold, the air-laid metallic power would not be able to deposit uniformly on the vertical surface of the mold. Gravity would direct or shift the power away from the vertical surface towards the horizontal surface, before the molding process can be initiated. This particle shifting would prevent the formation of a seamless filter medium having a horizontal and a vertical surface. even if metallic power could be deposited in a mold with a nonplanar surface, the resulting filter medium would likely have a non-uniform structure. Gravity would direct or shift the air-laid metallic power from higher portions of the mold towards lower portions of the mold, thereby resulting in a filter medium having some portions thicker than others. Accordingly, forming a high quality, non-planar, porous metallic filter medium with a conventional air-laying process would be extremely difficult, if not impossible. Third, conventional air-laying processes are inconvenient. For example, if a large filter medium is desired, then the metallic power must be deposited from high above a mold. The increased height would require a larger manufacturing facility and consequently higher maintenance costs.

### Summary of the Invention

In accordance with one aspect of the invention, methods of forming a porous medium may comprise depositing a medium precursor including inorganic particles into a mold cavity; moving a first die against a first portion of the medium precursor in the mold cavity and moving a second die against a second portion of the medium precursor in the mold cavity, including moving the first and second dies in the same direction or in opposite directions; and sinter bonding the inorganic particles together to form a porous medium having a porosity of about 50% or more.

Methods embodying the invention may further comprise applying pressure to a medium precursor including a slurry having a liquid medium and inorganic particles and separating at least some of the liquid medium from the slurry in response to the pressure.

The resulting porous medium may comprise a first portion having a first axial dimension and a second portion having a second axial dimension wherein the second axial dimension is greater than the first axial dimension and the first and second portions each have a predetermined porosity.

The resulting porous medium may comprise a porous sintered inorganic body portion having a first end and a porous sintered inorganic end portion closing the end of the body portion, the porous body portion and the porous end portion forming a unitary structure.

The resulting porous medium may comprise a porous sintered inorganic structure derived from a pressed mixture including a liquid medium and a plurality of inorganic particles having a nominal first size.

Embodiments of the invention may include processes for making a porous element which further comprises contacting a porous substrate with a slurry including a liquid medium and inorganic particles and sintering the inorganic particles together within pores of the porous substrate to mechanically interlock the sintered inorganic particles to the porous substrate.

The resulting porous element may comprise a porous medium of sintered inorganic particles and a porous substrate. At least a portion of the sintered inorganic particles are disposed within pores of the porous substrate, mechanically interlocking the porous medium and the porous substrate.

Methods embodying the invention may comprise depositing into the mold cavity a mixture including at least a liquid medium, a plurality of inorganic particles having a nominal first size and a plurality of inorganic particles having a nominal size, the first size being less than the second size, and sinter bonding the plurality of inorganic particles having a nominal first size and a plurality of inorganic particles having a nominal second size together.

The resulting porous medium may comprise a first plurality of inorganic regions having a first nominal size, a second plurality of inorganic regions having a second nominal size, wherein the first nominal size is less than the second nominal size and the plurality of inorganic regions interspersed between the second plurality of inorganic regions. The porous medium further comprises a plurality of bonds interposed between the first plurality of inorganic regions and the second plurality of inorganic regions.

Embodiments of the invention provide for a number of advantages. First, unlike conventional porous inorganic filter media, the porous inorganic filter media according to various embodiments of the invention exhibit improved particulate retention and higher voids volumes. For example, a small, highly porous, filter medium embodying the invention can permit the same amount of fluid flow as a larger filter medium having a low porosity, while having substantially the same particulate retention properties as the larger filter medium. A smaller filter medium uses less inorganic material than a larger filter medium, and can be used with a smaller housing which can also have less inorganic material. The use of less inorganic material in the filter medium and the housing reduces the likelihood that the inorganic filter medium will exhibit particle shedding or outgassing. Second, unlike conventional air-laying methods, methods according to various embodiments of the invention can produce inorganic filter media with high voids volumes and/or improved particulate retention properties without the difficulties of air-laying inorganic powders. Further, methods according to various embodiments of the invention can produce a high-quality filter medium having any desired shape.

### Brief Description of the Drawings

Figure 1(a) is a schematic illustration of an embodiment of a process of the invention.
Figure 1(b) is a top view of a hat-shaped filter medium.
Figure 2 shows an example of a mold apparatus.

### Detailed Description

One embodiment of the invention is directed to a process for making an inorganic filter medium, and in particular, a porous metallic filter medium. In one exemplary process, a slurry is formed. The slurry can include a liquid medium, inorganic particles, and an optional binder. In some embodiments, the inorganic particles include a plurality of inorganic particles having a nominal first size and a plurality of inorganic particles having a nominal second size, where the first size is less than the second size. Once formed, the slurry can be processed in any suitable manner. Preferably, at least some of the liquid medium can be separated from the slurry before, during or after the slurry is processed, thus forming a green structure. Later, the inorganic particles in the green structure or slurry can bond together to form a porous inorganic filter medium. For example, the green structure can be sintered in a furnace. The sintering can induce bonding between adjacent inorganic particles and can vaporize the liquid medium and/or binder in the green structure or slurry.

The slurry can include inorganic particles including any suitable metal-based material, ceramic material, or combination thereof which are sinterable. Examples of metallic materials include metal-based compounds such as pure metals, metal alloys, dispersion strengthened metals, and combinations thereof. Specific, non-limiting examples of metallic materials include nickel, chromium, copper, tungsten, zinc, gold, silver, platinum, nickel alloys, Iconel, Monel, Hastelloy, stainless steel, and combinations and/or oxides thereof. Of these materials, nickel and stainless steel based materials are preferred. In particular, nickel and stainless steel-based particles are highly resistant to corrosion and exhibit high strength. Exemplary ceramic materials include borides, oxides, and nitrides, such as BN, SiN, alumina, titania, etc. Further, any suitable combination of ceramic and/or metallic particles may be used. The particles may be made in any manner, including water or gas atomized metal powders, shattered metals, drawn or cast fibers, sol-gel process ceramic powders, or flame sprayed powders.

The inorganic particles used to form the porous inorganic filter medium can be in any suitable form, including for example, powder or fiber. The inorganic particles can include non-uniformly shaped particles including dendritic, acicular, irregular or fragmented particles. Alternatively, the inorganic particles can include uniformly shaped particles, such as spherical particles. Preferably, however, the inorganic particles have a shape which exhibits a high surface area. For example, micron-sized dendritic inorganic particles can exhibit a high surface area. Whether or not dendritic particles are used, the inorganic particles may have a surface area in the range from about 0.01 m²/g to about 10 m²/g and preferably have a surface area greater than about 0.25 m²/g. More preferably, the inorganic particles have a surface area between about 0.3 m²/g or less to about 3.0 m²/g or more. Suitable inorganic particles which can be used to form a porous inorganic filter medium include INCO '255 and INCO '210 nickel-based particles available from Inco, Inc. INCO '255 particles have a nominal size of about 2.5 microns and a BET surface area of about 0.62 m²/g. INCO '210 particles have a nominal size of about 0.7 microns and a BET surface area of about 2.0 m²/g.

Using inorganic particles with a high surface area can provide for a number of advantages. First, lower sintering temperatures can be used when sintering inorganic particles having a high surface area together. For example, high surface area dendritic particles typically have a plurality of appendages or tree branch-like structures. Because of these appendages, a mass of dendritic particles can have more points of contact and therefore more potential bonds between adjacent particles than a mass of relatively low surface area particles (e.g., spherical particles). As a result of this increased number of bonds, a mass of low-temperature sintered, high surface area, dendritic inorganic particles can have substantially the same structural stability as a mass of high-temperature sintered, low surface area, inorganic particles.

Advantageously, lower sintering temperatures can result in lower production costs. Low temperature sintering processes consume less energy than high temperature sintering processes and can be performed in less expensive sintering apparatuses. For example, a porous inorganic filter medium can be formed by sintering high surface area inorganic particles together at relatively low temperatures in a relatively low-cost, stainless steel sintering apparatus. On the other hand, a porous inorganic filter medium formed by sintering low surface area inorganic particulates together may require the use of a relatively high-cost, high-temperature ceramic sintering apparatus. Also, an inorganic filter medium made from high surface area inorganic particles can have improved particulate retention properties. For example, the paths through the pores in a filter medium formed from sintered, high surface area, inorganic particulates such as dendritic particulates can be highly tortuous and winding. These tortuous and winding pore paths in the filter medium can form traps, trapping or sieving any particulate contaminants which might otherwise pass therethrough. The tree branch-like appendages of dendritic inorganic particles may not only define irregularly shaped pores in the porous inorganic filter medium to be formed, but may also extend into the pores without contacting an appendage of an adjacent dendritic inorganic particle. The appendages which extend into the pores can obstruct contaminants which may otherwise pass through pores not having any appendages therein.

The inorganic particles can also have any size suitable for forming an inorganic filter medium. Smaller size inorganic particles yield a porous medium that has enhanced retention characteristics but may also have higher differential pressures. For example, the inorganic particles can have a nominal size between about 0.05 micron to about 200 microns, or between about 1 to about 40 microns. The inorganic particles used to form the filter medium may have only a single nominal particles size or may comprise a mixture (e.g., a generally or substantially uniform mixture) of nominal particle sized, such as a mixture of a plurality of inorganic particles having a nominal first size and a plurality of inorganic particles having a nominal second size, where the first size is less than the second size. For many embodiments, a significant portion of the filter medium, such as the entire filter medium, includes a generally or substantially uniform mixture of inorganic particles having at least two different nominal sizes. Put another way, the inorganic particles having at least two different nominal sizes may be substantially uniformly distributed amongst each other in the filter medium, preferably throughout the filter medium. Of course, the inorganic particles used to form the porous inorganic filter medium can include three, four, five, etc. groups of inorganic particles having different nominal sizes. Regardless of the specific number of different groups of particles used, the different groups of particles are preferably mixed together. When the inorganic particles having at least two different nominal sizes are mixed and then sintered together, distinct inorganic regions and bonding regions can form in the resulting filter medium. For example, plural inorganic particles having first and second nominal sizes can be mixed, and then sintered. The resulting porous inorganic filter medium can have a plurality of first and second inorganic regions (respectively corresponding to the plural inorganic particles having first and second nominal sizes), and a plurality of sinter-bonds interspersed between the plurality of first and second inorganic regions. The first and second plurality of inorganic regions can be distinct from the plurality of sinter-bonds which can result from solid or liquid state diffusion between the portions of contacting inorganic particles.

The plurality of inorganic particles having a nominal first size and the plurality of inorganic particles having a nominal second size can be used in any suitable proportion and can have a variety of characteristics. The slurry can include (e.g., based on the total weight of the slurry or the total weight of the inorganic particles in the slurry) from about 2-98 wt. %, preferably about 30-50 wt. %, e.g., 40 wt. % , inorganic particles having a nominal first size, and from about 2-98 wt. %, preferably about 50-70 wt. %, e.g., 60 wt. %, inorganic particles having a nominal second size, where the nominal first size is preferably less than the nominal second size. For example, the inorganic particles having a nominal first size can be from about 0.001 micron to about 0.99 microns, while the inorganic particles having a nominal second size can be from about 0.5 micron to about 45 microns. For example, the first size may be about 0.7 micron, while the second size can be about 2.5 microns. In a preferred embodiment, the plurality of inorganic particles having a nominal first size and/or the plurality of inorganic particles having a nominal second size include high surface area inorganic particles. In many embodiments the largest nominal particle size is preferably no greater than about 10 times the smallest nominal particle size, more preferably no greater than about 6 times, even more preferably no greater than about 4 or 2 times the smallest nominal particle size. The plurality of inorganic particles having a nominal first size (e.g., 0.7 micron) can have a BET surface area of about 2.0 m²/g and the inorganic particles having a nominal second size (e.g., 2.5 micron) can have a BET surface area of about 0.62 m²/g. Furthermore, the plurality of inorganic particles having a nominal first size and a plurality of inorganic particles having a nominal second size may be made of the same or different material. For example, the inorganic particles having a nominal first size can include an inorganic material having a low melting point such as nickel, while the inorganic particles having a nominal second size can include an inorganic high melting point material (e.g., stainless steel).

Porous inorganic filter media derived from inorganic particles having at least two different nominal sizes, or having plural first and second inorganic regions having different nominal sizes can provide for a number of advantages. For example, a porous inorganic filter medium made from inorganic particles having at least two different nominal sizes can have increased ductility and/or exhibit a reduced pressure differential. A porous inorganic filter medium with increased ductility is less likely to break or crack when subjected to pressure. Moreover, porous inorganic filter media made from particles having at least two different nominal sizes can result in a porous inorganic filter medium having an increased surface area and thus improved particulate retention properties. For example, if an inorganic filter medium is made from a plurality of inorganic particles having a small size (e.g., 0.7 microns) and a plurality of inorganic particles having a larger size (e.g., 2.5 microns), the larger size inorganic particles can define large pores in the filter medium. The smaller size particles, which can be bonded to one another, and the larger size inorganic particles, can occupy the space defined between the larger particles thereby forming even smaller pores and more tortuous pore paths than the larger particles alone would form. As a result, a fluid such as a gas can flow through the smaller pores which are provided by the larger and smaller particles and the more tortuous pore paths. However, particulate contaminants, which may have passed through the larger pores, can be retained by the smaller pores disposed between the larger and smaller particles. Preferably, the plurality of inorganic particles having a nominal first size and - the plurality of inorganic particles having a nominal second size include high surface area inorganic particles such as dendritic particles. As explained above, high surface area inorganic particles such as dendritic particles can increase the internal surface area and the particulate retention properties of a resulting porous inorganic filter medium.

The slurry can include any suitable binder. Preferably, the binder can stabilize or bind the inorganic particles in the slurry so that the inorganic particles do not substantially settle in the slurry. For example, for many slurries 3-8 grams of binder per liter of liquid medium may be sufficient. The binder can include any suitable synthetic or natural polymer. Exemplary binders include carboxymethylcellulose, carboxyethylcellulose, guar gum, alginates, methylcellulose, and locust bean gum. Particularly preferred binders include polyacrylic acids, such as Carbopol 941 and 934 (available from B.F. Goodrich Chemicals Company under the trade name Carbopol). Advantageously, the binder in the slurry can help reduce the likelihood of any unintended shifting of inorganic particles in the slurry, thereby decreasing the likelihood that the resulting inorganic filter medium will have a non-uniform pore structure.

The slurry can also include any suitable liquid medium. Preferably, the liquid medium has a lower viscosity than the binder, and together with the binder imparts a predetermined viscosity to the slurry. The viscosity of the slurry may be determined empirically such that the viscosity is low enough that the liquid medium separates sufficiently from the slurry when the slurry is pressed and the viscosity is high enough that particles remain uniformly suspended in the slurry until the slurry is pressed. The viscosity of the slurry can be adjusted by the addition of more or less liquid medium and/or binder, and can depend upon such factors as the size of the particles and the technique used to process the slurry. For example, a slurry which is to be coated can have a different viscosity than a slurry which is to be pressed in a mold or extruded. Examples of suitable liquid media include semisolid materials such as waxes and less viscous materials such as methanol, isopropyl alcohol, water or any combination of these substances. In one embodiment, the liquid medium can have a high surface tension (e.g., water). However, if a high surface tension liquid medium is used in the slurry, the liquid medium is preferably removed from the slurry or the green structure slowly to reduce the likelihood of cracking the subsequently formed green structure. For example, if the slurry includes water as a liquid medium, the slurry can be dried, e.g., by placing the slurry in a low temperature oven for a period of time to remove the water from the slurry and form a green structure.

Preferably, the liquid medium has a low surface tension. For example, the liquid medium can include a liquid having a surface tension less than water, or a surface tension less than about 72.4 dynes per centimeter. Non-limiting examples of liquid media having a surface tension less than about 72.4 dynes per centimeter include methanol, ethanol, hexane, benzene, and low surface tension aqueous solutions. Advantageously, the use of a low surface tension liquid medium in the slurry can reduce the likelihood of potential cracking that may occur if the liquid medium is removed from the slurry (e.g., to form a green structure). For example, some or substantially all of the liquid medium can be removed from the slurry by compressing the slurry. The low surface tension liquid medium can separate cleanly from the compressed slurry without substantially disrupting the contact between adjacent inorganic particles. Low surface tension liquids typically flow more easily than high surface tension liquids, because they do not have a tendency to pull upon themselves. The tendency of a high surface tension liquid medium to pull upon itself can potentially cause a subsequently formed green structure to crack if the high surface tension liquid medium is removed from the slurry or the green structure too quickly.

In a particularly preferred embodiment of the invention, the slurry can include a spacing agent. Spacing agents can help form pores in the green structure or final product and can reduce the likelihood that the inorganic particles may collapse during subsequent processing (e.g., during the removal of the liquid medium or sintering). Exemplary spacing agents include oxamide, methylcellulose, ammonium salts of carbonic acid or other weak organic acids, such as formic, acetic, or oxalic acids, and salts such as calcium chloride. Spacing agents in the slurry and/or the later formed green structure can be removed from the green structure before, after, and/or during the sintering of the green structure. Removal of the spacing agent can occur in any number of ways including decomposing the spacing agent by combustion, sublimation or leaching (e.g., chemical or physical leaching).

The use of spacing agents in embodiments of the invention can result in a porous inorganic filter medium having improved strength and/or a greater voids volume. For example, when spacing agents are incorporated into the slurry, the slurry and subsequently formed green structure can be compressed without significantly decreasing the voids volume of the resulting inorganic filter medium. Compressing the slurry can favorably increase the contact points and potential bonds between adjacent inorganic particles without inadvertently collapsing the internal pore structure of the resulting porous inorganic filter medium. If the internal pore structure collapses during processing, the resulting porous inorganic filter medium may have a reduced voids volume. When the spacing agents are removed from a compressed green structure or slurry, pores can be left in their place. By using spacing agents in the slurry, a voids volume or porosity of greater than about 50 % , preferably greater than about 70 % or about 75%, and more preferably greater than about 80 % or about 90 % can be achieved. Most preferably, the voids volume or porosity is in the range from about 60 % to about 80 % , e.g., about 70 %.

In an illustrative example, a highly porous inorganic medium can be formed with spacing agents. A slurry including inorganic particles, a binder, a liquid medium and a spacing agent, can be agitated to uniformly disperse the slurry components. The slurry can then be processed (e.g., by coating, extruding, or molding) and may then be compressed. Compressing the slurry forces the inorganic particles in the slurry together and separates some of the liquid medium from the slurry. After a portion of the liquid medium is removed from the slurry, a green structure is formed. The green structure can be heated to a suitable temperature range to decompose the spacing agent into, e.g., a gas. The gas then separates from the green structure leaving pores where the spacing agents were before they were decomposed. A highly porous green structure is subsequently produced, and can be sintered to produce a highly porous inorganic filter medium.

Alternatively, instead of removing the spacing agent in a separate process, the spacing agent can be removed during or after the sintering process. For example, a green structure having spacing agents and inorganic particles can be placed in a sintering furnace. The green structure can then be heated to decompose the spacing agents while sintering the inorganic particles together. The spacing agent in the slurry and/or the green structure can help maintain constant spacing between the inorganic particles when compressing, heating and/or sintering the slurry or green structure. Consequently, the likelihood that the inorganic particles may collapse when compressing and/or sintering a porous inorganic filter medium precursor (e.g., a slurry or green structure) is reduced, thereby resulting in highly porous inorganic filter medium.

The slurry can optionally include additives. Additives can include one or more of sinter aids, viscosity reducing agents, viscosity increasing agents, fillers, lubricants, surfactants, etc. For example a surfactant available under the trade designation Triton X may be used.

The slurry can be agitated or mixed in any suitable manner and with any suitable apparatus. For example, the slurry can be mixed in a blender, or by a stirrer or a shaker. Preferably, the slurry can be agitated or mixed so that the inorganic particles in the slurry are uniformly dispersed. By doing so, the inorganic particles in the slurry, green structure or a subsequently formed porous inorganic filter medium will also be substantially uniformly distributed throughout the green structure of filter medium. The uniform distribution of inorganic particles in a filter medium also provides for a substantially uniform distribution of pores (i.e., uniform porosity) to the filter medium.

The slurry can be processed in any suitable manner. Exemplary shaping methods include pressing, coating, molding, and extrusion. Exemplary pressing methods include cold pressing, hot pressing, and isostatic pressing. Pressing the slurry can be advantageous. For example, pressing the slurry prior to sintering can compact the inorganic particles together and can increase contact and potential bonds between adjacent inorganic particles. As explained previously, increasing the bonds between adjacent inorganic particles can increase the strength of the resulting porous inorganic filter medium. The slurry can also be coated. Exemplary coating methods include doctor blade coating, roller coating, curtain coating, dip coating, slip coating etc. For example, a substantially planar surface of a porous or nonporous structure can be coated with a layer of slurry. The substantially planar layer of slurry can then be further processed (e.g., compressed, sintered) to form a substantially planar porous inorganic filter medium. The inorganic particle-containing slurry can also be molded into any desired shape. Exemplary molding processes include cast molding or injection molding. For example, the slurry can be injection molded into a mold defined by cup-shaped dies to form a cup shaped slurry. The cup shaped slurry can then be processed (e.g., pressed, heated, and/or sintered) to form a cup shaped porous inorganic filter medium. The slurry can also be extruded into any desired shape. For example, the inorganic particle containing slurry can be extruded through a die (e.g., substantially annularly shaped) into the shape of a seamless tube. The seamless tube-shaped slurry can then be further processed into a seamless, tube-shaped, porous, inorganic filter medium. Finally, any combination methods can be used to shape or process the slurry. For example, the slurry may be deposited or coated on an inner portion of a female mold. Thereafter, a male mold can compress the slurry to further shape the slurry into a desired structure. The compressed slurry can then be processed (e.g., by sintering) into a porous inorganic filter medium.

In one preferred embodiment, a filter medium such as a non-planar filter medium can be produced by separately pressing individual portions of a filter medium precursor (e.g., a slurry or green structure) such as a non-planar precursor with, e.g., two or more dies, to provide predetermined characteristics such as porosities, e.g., uniform porosities, in different portions of the precursor, including portions having different axial dimensions. The dies can cooperate to define the molded shape produced by a molding apparatus. Preferably, the two or more dies of the molding apparatus can move in the same or opposing directions or planes along a common axis to press the filter medium precursor. The pressure applied, the pressing time, and/or the distance traveled by one or more dies to compress a portion of a filter medium precursor may be the same or different than that of other dies compressing other portions of the filter medium precursor. For example, the pressure applied, pressing time, and/or distance traveled by one or more dies used to compress a first portion of a filter medium precursor can be less than that of one or more other dies compressing a second portion of the filter medium precursor. This can be preferable if the first portion has a shorter axial dimension in the pressing direction and/or a smaller volume of inorganic particles than the second portion. By doing so, the longer second portion can be compressed to have any suitable predetermined characteristic, e.g., particle density or distribution or porosity which is the same as or different from the shorter first portion, even though the second portion has a different axial dimension in the direction of pressing and/or a greater volume of inorganic particles than the first portion. The characteristics of the separate portions of the medium may be predetermined in accordance with a compression ratio for each portion. The compression ratio for each portion is the ratio of the desired final axial dimension of the portion to the sum of the desired final axial dimension and the stroke or axial displacement of the die(s) as it (they) compress the portion of the medium precursor. For example, if the predetermined characteristic of the porous medium is uniform porosity for all portions, than each portion may be compressed at the same compression ratio.

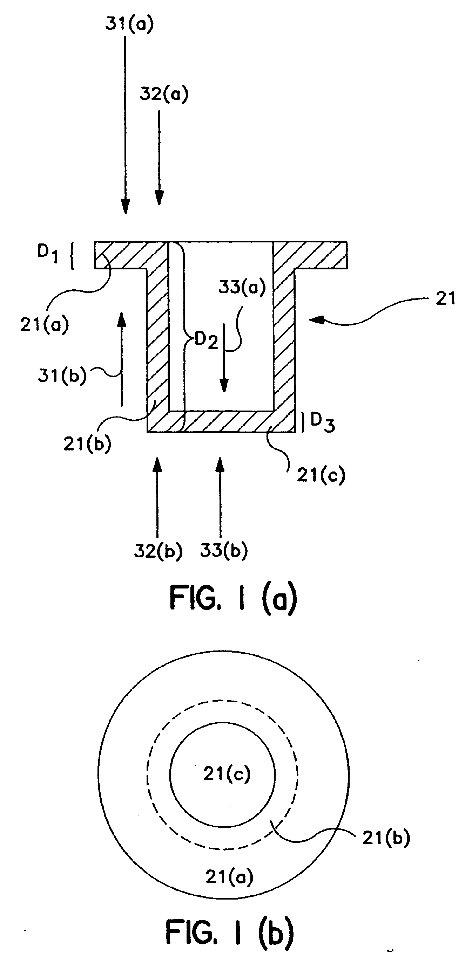

The application of pressure to individual portions of the filter medium precursor removes many limitations that may be present when pressing a shaped filter medium precursor with a single, unidirectional rigid die having a predetermined complex shape. For example, if a single, unidirectional rigid die (not shown) is used to press one side (e.g., the side including a concave surface) of the cup- or hat-shaped precursor 21 shown in Figure 1(a), the distance over which the rigid die can travel can be limited by the distance over which the rigid die travels to compress the shorter first portion 21(a) or the third portion 21(c) of the hat-shaped precursor 21, and not the longer second portion 21(b). The compressed first and/or third portions 21(a), 21(c) can prevent further movement of the rigid die before the rigid die can fully compress the second portion 21(b).

In contrast, in embodiments of the invention, substantially all portions of a filter medium precursor can be substantially fully compressed, providing, for example, substantial uniformity of the distribution and/or density of the inorganic particles or the porosity in substantially all portions of the precursor and the resulting porous inorganic filter medium. A porous inorganic filter medium having a uniform distribution and/or density of inorganic particles can have a uniform porosity.

One example of a process for forming a porous inorganic filter medium using two or more dies is shown in Figure 1(a). Figure 1(a) is a schematic diagram of an example of a process for pressing a hat-shaped filter medium precursor 21, which can later processed (e.g., sintered) to form a hat-shaped porous inorganic filter medium. Figure 1(b) shows a top view of the hat-shaped filter medium precursor 21 shown in Figure 1(a). The hat-shaped filter medium precursor can be characterized as having three portions including a first portion 21(a), second portion 21(b), and a third portion 21(c). The first portion 21(a) can form the brim of the hat shape, while an annularly shaped second portion 21(b) and a disk-like third portion 21(c) can collectively form the crown of the hat shape. Pressure can be applied to the precursor 21 by one or more dies 31(a), 31(b), 32(a), 32(b), 33(a), 33(b), which can correspond to movable or non-movable dies of molding apparatus. Although Figure 1(a) shows dies on opposing sides of the precursor 21, in other embodiments, pressure can be applied to only one face of a precursor portion. For example, pressure can be applied to the precursor 21 with select dies 31(a), 32(b), 33(b), while one or more corresponding dies 31(b), 32(a), 33(a) on the opposing side of the precursor 21 are either stationary or retractable.

In this exemplary process, a slurry including substantially uniformly distributed inorganic particles can be introduced into a mold cavity. One or both of the dies 31(a), 31(b) can move and apply pressure to one or both opposing surfaces of the first portion 21(a) to compress the first portion 21(a). As the slurry is pressed by the dies, the liquid medium may be squeezed out of the slurry through gaps between the dies and/or between the dies and the housing, the size of the gaps may vary depending on factors such as the size of the particles in the slurry. Smaller gaps may be provided for smaller particles. For many embodiments the gaps may be in the range from about 2.54.10⁻³ cm to 10⁻³ cm (0.001 inch to about 0.004 inch). Before, during or after the application of pressure to the first portion 21(a), pressure can be applied to one or both opposing sides of the second portion 21(b) and/or the third portion 21(a) of the filter medium precursor 21 with one or more dies 32(a), 32(b), 33(a), 33(c). Any or all of the dies 32(a), 32(b), 33(a), 33(c) can operate separately or independently of each other and separately or independently of either or both of the dies 31(a), 31(b) applying pressure to the first portion 21(a). Preferably, all dies end their stroke at the same time.

By separately pressing individual filter medium precursor portions, such as the first portion 21(a), second portion 21(b), and the third portion 21(c) of the precursor 21 shown in Figure 1(a), the compression of each individual portion of the filter medium precursor (e.g., a slurry) can be maximized or tailored to predetermined specifications. This may be advantageous if the porous inorganic filter medium to be formed has a non-planar shape and a substantially uniform porosity. The individual portions may then be compressed at the same compression ratio. For example, in Figure 1(a) the dimension D₂ of second portion 21(b) in the direction of pressing is greater than the dimension D₁ of the first portion 21(a) and the dimension D₃ of the third portion 21(c) in the direction of pressing. To compress the longer second portion 21(b) to substantially the same particle density as the shorter first and second portions 21(a), 21(c), the pressure applied, the pressing time, and/or the distance traveled by one or both of the dies 32(a), 32(b) applying pressure to the second portion 21(b) can be greater than that of the dies 31(a), 31(b), 33(a), 33(b) applying pressure to the first or third portions. In contrast, if a single unidirectional die is used to simultaneously apply pressure to one side (e.g., the concave side) of the filter medium precursor 21, the compression of the second portion 21(b) may not be maximized, because the distance over which the single unidirectional die can travel may be limited to the distance over which the first and/or third portions 21(a), 2 1(c) can be compressed. Accordingly, in embodiments of the invention, characteristics such as the distribution and/or density of inorganic particles and/or the porosity in substantially all portions of a filter medium precursor (even the portions having long dimensions in the direction of pressing), and the subsequently formed porous inorganic filter medium, can be predetermined, for example, can be substantially the same, thus providing the resulting porous inorganic filter medium with a uniform particle and pore distribution, or different, thus providing a filter medium with different portions having different characteristics. Further, the method and apparatuses according to embodiments of the invention can be used to mass produce high quality porous inorganic filter media to close tolerances.

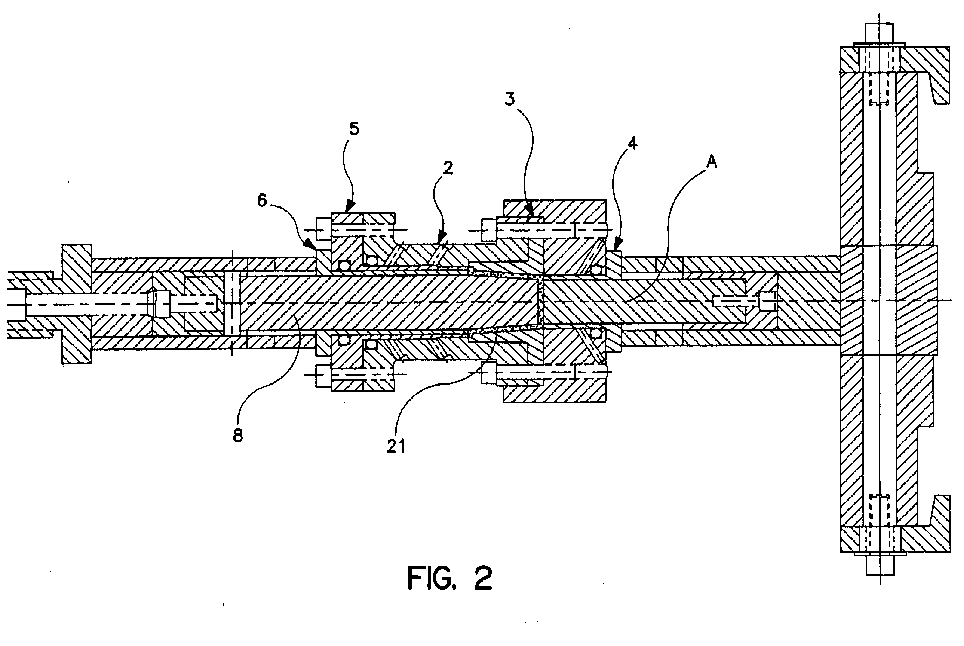

One example of a mold apparatus embodying the invention is shown in Figure 2. A hat-shaped filter medium precursor 21 is formed by depositing a slurry in a mold cavity and pressing the slurry with several dies. The first portion of the precursor is pressed by a first die 5 and the third portion of the precursor is pressed by another die 8. The second portion of the precursor is pressed between two moving dies 6 and 4. Gaps between the dies and between the dies and the housing 2, 3 provide for discharge of the liquid medium from the slurry. The dies are connected to driving mechanisms, such as pistons, to effect movement of the dies along a common axis A.

Nonplaner porous media having a variety of desired shapes may thus be formed as a unitary structure, i.e., a structure having no bonds, e.g., welds, braze bonds, adhesive bonds, etc., between various components of the filter medium. For example, the hat-shaped medium precursor includes a second body portion and a third end portion which closes the end of the body portion, and the body portion and the end portion comprise a unitary structure free of any bonds. While the illustrated body portion is generally cylindrical or slightly conical, it may have a variety of suitable cross sectional shapes and yet may be conveniently closed at one end by an end portion which forms a unitary structure with the body portion. The second body portion and the first brim portion of the hat-shaped precursor may also comprise a unitary structure free of any bonds.

If desired, some of the liquid medium can be removed from the slurry or green structure. Preferably, a substantial portion of the liquid medium is removed from the slurry or green structure. Removal of the liquid medium can occur in any suitable manner. For example, the liquid medium can be removed from the slurry by drying, vacuum, centrifuging, compression of the slurry, or any combination of suitable liquid removal methods. In one embodiment, the liquid medium can be removed from the slurry by evaporating the liquid medium from the slurry to form a green structure. For example, the slurry can be heated to a temperature between about 100° C to about 450° C to evaporate the liquid medium from the slurry. Once a substantial portion of the liquid medium is removed from the slurry, a freestanding green structure having inorganic particulates can be produced. The freestanding green structure can then be handled for further processing. For example, the green structure can be transferred to a sintering device for sintering.

In a preferred embodiment, the slurry can be compressed to separate the liquid medium from the slurry. The slurry can be compressed by cold, hot or warm pressing. Compressing the slurry can not only facilitate removal of the liquid medium from the slurry, but can also increase the contact and potential bonds between adjacent inorganic particles. In a preferred embodiment, a fine porous structure such as a mesh, woven fabric or a nonwoven fabric can be used to help separate the liquid medium from the slurry. For example, a fine pore mesh can lie adjacent to a slurry. Pressure can be applied to the fine pore mesh and the slurry so that the liquid medium separates from the slurry by passing through the pores of the mesh while the mesh retains the binder and the inorganic particles. Preferably, the liquid medium passing through the fine porous structure is substantially pure.

If more structural stability in the green structure is desired, then more liquid medium can be removed from the slurry and/or the subsequently formed green structure. A green structure with added structural stability is preferred if the porous inorganic filter medium to be produced is to have a precisely defined shape, such as a cup shape. Removal of additional liquid medium from the green structure can occur in any suitable manner and can use any suitable combination of liquid medium removal methods. For example, after compressing a substantial portion of the liquid medium from the slurry, even more liquid medium can be removed from the slurry by heating the compressed slurry in a low temperature-heating device. Heat from the heating device can remove (e.g., by evaporation) additional liquid medium from the squeezed slurry. Alternatively or additionally, the green structure may be further compressed to separate additional liquid medium from the green structure. As more liquid medium is removed from the slurry or green structure, the structural stability of the green structure can be increased.

Once a green structure is formed from the slurry, the inorganic particles in the green structure can then be bound together. The inorganic particles can be bound by sintering the inorganic particles together. Sintering can occur in any suitable device or atmosphere. Exemplary sintering devices include ceramic and stainless steel sintering apparatuses (e.g., ovens). Preferably, the sintering atmosphere includes an inert or a reducing atmosphere. Reducing or inert sintering atmospheres can prevent or inhibit the formation of oxides on the inorganic particles. Exemplary inert atmospheres include argon, vacuum, helium, nitrogen, or mixtures thereof. Exemplary reducing atmospheres include hydrogen, carbon monoxide, dissociated ammonia, and mixtures thereof.

The sintering temperature can include any suitable temperature, but is preferably high enough to induce solid or liquid state diffusion of atoms between adjacent inorganic particles to form bonding regions (e.g., sinter-bonds). Typical sintering temperatures can be between about 450 ° C to about 900 ° C. The sintering temperature can vary depending upon the type of inorganic particles used. For example, typical sintering temperatures for nickel-based particles can be between about 500° C and about 750° C, and preferably between about 525 °C and about 650° C. On the other hand, typical sintering temperatures for stainless-steel based particles can be somewhat higher e.g., between 1050°C and 1150°, because stainless steel has a higher melting point than nickel.

After the inorganic particles bond together (e.g., by sintering), the formed porous inorganic structure can be subjected to any suitable post-bonding operation. Post-bonding operations can include working treatments such as pressing or rolling; heating treatments such as annealing or re-sintering; and/or finishing treatments such as surface treating (e.g., plating). Such post-bonding operations can be desirable if a porous inorganic structure having particular properties is desired. For example, the porous inorganic structure can be annealed to reduce any internal stress that can be present therein.

The porous inorganic filter medium can have any suitable characteristics. For example, the porous inorganic filter medium can be highly porous, strong, ductile, and can have favorable particle retention properties. The porous inorganic filter medium can also have a high surface area and/or irregularly shaped pores (e.g., dendritically shaped pores). For example, in embodiments of the invention, the inorganic filter medium can include a BET surface area of at least about 0.25 m²/g. Preferably, the inorganic filter - medium can include a BET surface area of at least about 0.35 m²/g.

The resulting porous inorganic filter medium can have any suitable voids volume or porosity and pore rating (pore size), preferably a high voids volume and a small pore size. The porous inorganic filter medium preferably can have a voids volume of at least about 50 % . More preferably, the porous inorganic filter medium can include a voids volume of at least about 70 % or about 75 % , or even at least about 80 % or about 90 % or more. Preferably the voids volume or porosity is in the range from about 60 % to about 80 % , e.g., 70 % . The porous inorganic filter media embodying the invention can have pore sizes and/or characteristics suitable for use in a wide variety of processes, including microfiltration, ultrafiltration, and/or nanofiltration processes. For example, some porous inorganic filter media can have a nominal pore size of about 10 microns or more, in the range from about 1 micron to about 10 microns, in the range from about 0.04 micron to about 10 microns, or in the range from about 0.01 micron or less to about 1 micron. Other porous inorganic filter media embodying the invention can have the nominal pore dimensions in the range from about 10 angstroms or less to about 200 angstroms or more. Yet other porous inorganic filter media embodying the invention can have a molecular weight cutoff rating of about 200 daltons or less, in the range from about 200 daltons to about 1000 daltons, in the range from about 1000 daltons to about 500,000 daltons, or greater than about 500,000 daltons. In some processes (e.g., ultrafiltration), the porous inorganic filter medium can have an absolute removal rating within the range from about 0.04 µm to about 20 µm.

The porous inorganic filter media can also have pores extending from surface to surface in a relatively uniform structure, or in a tapered or graded pore structure. A porous inorganic filter medium having a tapered or graded structure can be formed by any suitable method. For example, two green inorganic structures with different voids volumes and/or pore ratings may be placed together and sintered. The inorganic particles within each of the green inorganic structures can bond together, while the two green inorganic structures can bond to each other. In another example, a porous inorganic filter medium with a first pore rating or a green structure capable of producing a porous inorganic filter medium with the first pore rating can be coated with an inorganic-particle containing slurry capable of forming a porous inorganic filter medium with a second pore rating. This coated structure can then be processed (e.g., sintering) into a single porous inorganic filter medium with a first pore rating and a second pore rating. In yet another example, two separately formed porous inorganic filter media with two different pore ratings can be placed adjacent to one another and joined (e.g., by sintering or welding). A porous inorganic filter medium having a graded or a tapered pore structure can provide for a number of advantages. For example, the portion of the porous inorganic filter medium having a larger pore rating can serve as a prefilter or support structure for the porous inorganic filter medium having a smaller pore rating. Prefilters can increase the useful life of a filter medium, by preventing macroscopic particles in a fluid stream from prematurely fouling or clogging a downstream portion of a filter medium.

The porous inorganic filter medium can have any suitable shape. The porous inorganic filter medium can planar or curved, and more specifically can be shaped as a disk, plate, cup, envelope, etc. In one embodiment, the filter medium can have a pleated structure. By providing an inorganic filter medium with a pleated structure, the filter area available for a limited envelope (e.g., one defined by a housing) can be increased. In a preferred embodiment, the porous inorganic filter medium can comprise a thin planar structure, such as a membrane. Although the porous inorganic filter medium can have any suitable thickness (whether cup shaped, planar, etc.), it preferably has a thickness from about 0.01 to about 0.5 inch, or between about 0.1 to about 0.4 mm or more.

Advantageously, the porous inorganic filter media can exhibit reduced particle shedding and increased particulate retention properties. In accordance with embodiments of the invention, a smaller filter medium can be formed if the filter medium has a higher voids volume, because a smaller filter medium having a high voids volume can permit the same amount of fluid through as a larger filter medium having a low voids volume. A smaller filter medium can require less inorganic material than a larger filter medium, and can be used with a smaller housing which also requires less material. The use of less inorganic material in a filter medium and the housing can reduce the likelihood that the inorganic filter medium will exhibit particle shedding or outgassing. Accordingly, the low particle shedding and/or low outgassing porous inorganic filter media embodiments of the invention can be ideally suited for use in point of use filters where particle shedding and outgassing is preferably minimized.

The porous inorganic filter medium can form part of a filter element. The filter element can also include a porous substrate, and can have any suitable shape or form. For example, the filter element can be planar, cylindrical, cup shaped, pleat-shaped, etc. The substrate may or may not be bonded to the filter medium, and can provide functions such as support, drainage, and/or prefiltration capability to a filter medium. The porous substrate can also be located upstream and/or downstream of the porous inorganic filter medium. Suitable porous substrates can include PMM^{™} or PSS^{™} available from Pall Corporation, Cortland, N.Y.

The porous substrate can have any suitable form. The shape of the porous substrate can be chosen according to the desired filter element to be formed. For instance, if a pleated filter element is desired, then a porous inorganic filter medium can be formed on, or concurrently with a pleated porous substrate. Alternatively, if a cylindrical filter element is desired, then the slurry can be deposited on a generally cylindrical porous substrate. Examples of porous substrates include screens, meshes, porous plates, and woven and nonwoven fabrics. The porous substrate can also include sintered inorganic particles or have a larger pore rating than the supported filter medium. Further, the substrate can have any suitable thickness such as a thickness of about 0.0254 to 0.254 cm (1/100 inch to about 1/10 inch).

The porous substrate can be made of any suitable material. The porous substrate can include any inorganic material, and can include the same or different material than the inorganic material used in the porous inorganic filter medium. For example, the porous substrate can include a metal such as stainless steel or a ceramic such as alumina, while the porous inorganic filter medium can include a metal such as nickel. Preferably, the porous substrate includes a material which does degrade when subjected to a high-temperature process (e.g., sintering).

The filter element can be formed in any suitable manner. In one method, a porous inorganic filter medium precursor can be joined to a porous substrate, prior to sintering. The porous inorganic filter medium precursor can be a slurry which can be coated onto or impregnated into the porous substrate (e.g., a stainless steel nonwoven fabric). If desired, the resulting structure can be shaped (e.g., corrugated). The slurry/porous substrate combination can then be subjected to the previously described liquid medium removal and/or sintering processes. The sintering process not only sinters the inorganic particles in the slurry together, but can also optionally sinter the inorganic particles to the porous substrate. Alternatively, the porous inorganic filter medium precursor can be a green structure which can be separately formed, and then placed adjacent to a porous substrate. The combined green structure/porous substrate can be sintered to bond the inorganic particles in the green structure together while sintering the inorganic particles to the porous substrate. In another example, a porous inorganic filter medium precursor and a porous substrate precursor can be joined and processed together. For example, the porous inorganic filter medium precursor may be a slurry which can be coated on a porous substrate precursor, such as a green inorganic fabric mesh. The mesh-slurry combination can then be subjected to the previously described liquid medium removal and/or sintering processes to form a filter element. Alternatively, a green structure capable of forming a porous inorganic filter medium can be placed on a green inorganic fabric mesh and sintered. During sintering, the inorganic particles in both the green structure and the green inorganic fabric mesh can bond together, while the green structure and the green inorganic fabric can bond to each other. In yet another example, a porous inorganic filter medium can be joined to a porous substrate, while neither the porous inorganic filter medium nor the porous substrate is in the form of a precursor. For example, a porous substrate can then be joined to the porous inorganic filter medium by methods such as sintering, soldering or welding.

A filter element can be formed by coating a porous substrate with a slurry so that the slurry partially or fully impregnates pores of the porous substrate, especially the layer or layers of pores just below the coated surface of the substrate. By partially or fully impregnating the pores of the porous substrate with the slurry including the inorganic particles, the resulting porous inorganic filter medium can be reliably joined to the porous substrate. For example, a thin layer of slurry can be coated (e.g., a slip coated) onto a planar or cylindrical porous substrate so that at least some of the slurry including the inorganic particles impregnates the pores of the porous substrate near the surface. After impregnating the substrate with the slurry, the inorganic particles in the slurry can be sintered together. Preferably, the substrate has a higher sintering or melting temperature than the inorganic particles in the slurry. For example, the inorganic particles may comprise nickel and the substrate may comprise a higher temperature material such as stainless steel. The impregnated substrate can be heated to a temperature sufficient to sinter the inorganic particles together, but not to the porous substrate. At the impregnated region of the resulting filter element, at least a portion of the porous inorganic filter medium and a portion of the porous substrate are mechanically engaged or interlocked at the surface of the porous substrate by means of the sintered inorganic particles locked in the pores of the substrate. Preferably, the engagement or interlocking between the porous inorganic filter medium and the porous substrate can occur without substantial fusing or sintering between the porous substrate and the porous inorganic filter medium. Put another way, the porous substrate and the porous inorganic filter medium can be joined together without the presence of a substantial number of sinter bonds between the porous structure of the filter medium and the porous structure of the porous substrate.

The porous substrate can be impregnated with the slurry in any suitable manner. In some embodiments, the slurry can be coated onto the porous inorganic substrate in a manner sufficient to partially or fully impregnate the porous substrate with the slurry. For example, a cylindrical or planar porous substrate can be coated with a layer of slurry by dip coating, roller coating, doctor blade coating, etc. The coated slurry layer may be somewhat thinner or wetter and a portion of the slurry including the particulates partially impregnates a surface of the porous substrate. The slurry layer may be coated in a manner such that the resulting porous inorganic filter medium has a thickness of less than about 0.152 cm (0.060 inch), preferably less than about 0.1 cm (0.040 inch), or preferably less than 0.05 cm (0.020 inch) or 0.0254 cm (0.010 inch) e.g., about 0.0025 to 0.005 cm (1 to about 2 thousandths of an inch). The inorganic particles in the slurry at the impregnated region of the porous substrate can then be sintered together within the pores at the surface of the porous substrate. The resulting filter element can include a porous inorganic filter medium in the form of a thin membrane on a porous substrate. At the impregnated region, the thin membrane and the porous substrate can be interlocked mechanically or engaged. If desired, an operation such as pressing (e.g., isostatic pressing or calandering) vacuum, pressure, or any suitable combination of such operations can be used to help impregnate the pores of the porous substrate with the slurry. A filter element having a thin porous inorganic membrane at the surface of a porous substrate can be structurally stable, yet have a low pressure drop. In contrast, a porous inorganic depth filter may have a higher pressure drop.

Sintering the inorganic particles of the porous inorganic filter medium together within the pores of the porous substrate, but not to the porous substrate can be advantageous. For example, the substantial absence of additional sinter bonds between the porous inorganic substrate and the filter medium can result in a filter element having a decreased pressure drop, high particulate retention properties and suitable strength. Because of the number of sinter bonds in the filter element can be reduced, a fluid can pass through the filter element with less resistance than through a filter element having an increased number of sinter bonds. Furthermore, in some embodiments, production costs can be lowered by reducing the number of sinter bonds in a filter element. For example, a filter element may be produced by coating a slurry including metal particles having a low melting and/or sintering temperature (e.g., nickel) on a porous substrate having a high melting and/or sintering temperature (e.g., stainless steel). After some of the slurry is impregnated into the pores of the porous substrate, the entire structure can be sintered at a temperature high enough to bond the inorganic particles to each other, but not high enough to bond the inorganic particles to the porous substrate. The resulting filter element includes a filter medium engaged with or interlocked with the porous substrate. Since less heat can be used to join the filter medium to the substrate, less energy and consequently lower costs can be used to create a filter element. Moreover, by using lower sintering temperatures, the pores of the porous substrate are less likely to collapse or deform in response to heating. Consequently, a filter element having less defects can be created.

A filter element according to embodiments of the invention can provide for advantages. For example, the porous substrate of the filter element can help structurally support the porous inorganic filter medium. This may be preferable if the porous inorganic filter medium is intended to filter a high pressure fluid. Additionally, the filter element can provide for better overall filtration properties than an unsupported porous inorganic filter medium. For example, a porous substrate can serve as a prefilter for a porous inorganic filter medium with a smaller pore rating than the porous substrate.

The porous inorganic filter medium or the filter element can be used in any suitable manner. For example, the porous inorganic filter medium or the filter element can be inserted across a fluid flow path defined by a housing having any suitable construction or geometry. The porous inorganic filter medium or the filter element can be joined to the housing either directly or indirectly, and by any suitable joining method. Joining methods include electron beam welding, laser welding, inert gas welding, resistance welding, soldering, and sintering. The housing can also include suitable material. Preferably, the housing is made of an inorganic material which can be joined to the porous inorganic filter medium and/or the filter element. It this regard, the material used for the housing can be compatible with the material used for the porous inorganic filter medium. Exemplary housing materials include nickel and stainless steel.

The porous inorganic filter medium or the filter element can also form part of a filter cartridge or filter assembly. For example, the porous inorganic filter medium and/or filter element may be used as a separation medium of a filter cartridge or filter assembly. Filter cartridges and filter assemblies according to embodiments of the invention are preferably easily replaced if they become spent.

Filter cartridges in accordance with embodiments of the invention can have any suitable form. An exemplary filter cartridge can be a self-contained separation element, provided with a porous inorganic filter medium or a filter element in tubular form, capped off by end caps at one or both ends. Either or both end caps can have a through opening for fluid circulation through the porous inorganic filter medium or the filter element in either direction. End caps can be attached to the ends of the tubular porous inorganic filter medium or filter element by any suitable method including sintering or welding or in a unitary manner as previously described. Filter cartridges in accordance with embodiments of the invention can include simple cylinders, corrugated cylinders, one or more stacked discs, etc.

Filter assemblies may include, for example, a filter element or a filter medium disposed in a frame. The frame may be shaped as a parallelepiped, and the filter element or filter medium may be attached to the frame in any suitable manner (e.g., welding). If desired, the filter medium or filter element of the filter assembly can have a HEPA or ULPA rating.

The filter media, filter elements, filter cartridges, and filter assemblies according to embodiments of the present invention can be used in a variety of applications. For instance, embodiments of the invention can be used to filter process fluids such as liquid polymers and hot gases. Also, since embodiments of the invention have structural stability, they can be cleaned by reverse flow cleaning processes. In these processes, a high pressure fluid stream or pulse can be directed in a direction opposite to the flow path of the fluid stream being filtered. By doing so, any cake residing at the surface of the filter can be removed so that the filter can be reused for further purification.

The following description describes an exemplary method for forming a porous inorganic filter medium.

### Example 1

A slurry is formed by mixing 1 liter of methanol and 5 grams of 934 Carbopol binder in a blender. Into this slurry mixture in sequence is blended 1.79 grams of Triton X surfactant, 80 grams of Oximide 4µ spacer particles, 160 grams of Inco 255 nickel powder having a nominal particle size of about 2.7µ, and 107 grams of Inco 210 nickel powder having a nominal particle size of about 7µ. This slurry mixture is mixed in the blender until the slurry has a relatively uniform composition and the presence of pockets and/or clumps in the slurry is minimized, e.g., about 10-20 minutes. Once the slurry appears to be substantially uniform, the slurry is deposited in the cavity of a female mold on a 0.5 micron Teflon membrane which rests on a screen in the female mold. The area of the female mold is about 5 cm by 12.7 cm (2" by 5') and the slurry is deposited to a depth of about 0.635 cm (0.25 inch). Once deposited, a countermold is inserted into the cavity containing the slurry. The weight of the countermold compresses the slurry against the Teflon mesh and the female mold to squeeze out some or most of the methanol. The compression of the slurry forces the methanol through the mesh, screen, and a liquid outlet in the female mold. At this point, sufficient methanol is removed from the slurry so that the methanol depleted slurry is a free-standing green structure. The free-standing green structure is then removed from the mold. Additional methanol is then removed from the freestanding green structure by heating the green structure in a low temperature oven. Subsequently, the free-standing green structure is placed in an oven and is heated to about 371 °C in an argon atmosphere to combust the oxamide spacing agent. The combusted spacing agent creates additional pores in the free-standing green structure. The free-standing porous green structure is then placed in a sintering furnace and is fired in an atmosphere of about 60 % nitrogen/40% hydrogen at about 525 °C for about 60 minutes to sinter the metallic particles in the free-standing, porous green structure together. After sintering the metallic particles in the porous green structure, a porous metallic filter medium is formed. The formed porous metallic filter medium has a voids volume of about 85%.

### Example 2

16.3 grams of the slurry mixture of Example 1 is deposited in a mold apparatus of the type shown in Figure 2. The dies are positioned against the slurry to define a first portion, e.g., a brim portion, a second portion, e.g., a sidewall or body portion, and a third portion, e.g., an end portion. The dies are then actuated such that the does move at a rate of about 2.54 cm (1 inch) per minute or less to provide a 55 % compression ratio for each of the first, second, and third portions. The dies forming the first and third portions move through an axial displacement of about 0.2 cm (0.080 inch) to form first and third portions having a thickness of about 0.165 cm (0.065 inch) and the dies forming the second portion move through a total axial displacement of about 3.5 cm (1.375 inches) to form a second portion having an axial dimension of about 3.0 cm (1.19 inches). This uniform compression ratio provides a uniform porosity for each of the three portions. As the pistons are moved along their axial displacement, liquid from the slurry is displaced through the gaps between the dies and between the dies and the housing. After the dies have moved through their axial displacement and the slurry has been compressed to squeeze some or most of the methanol from the slurry, the dies are retracted and the free-standing hat-shaped green structure is removed from the mold apparatus. The green structure is air dried at room temperature to remove the remaining methanol. Subsequently, the free-standing hat-shaped green structure is placed in an oven and is heated to about 371°C in an argon atmosphere to combust the oximide spacing agent. The porous structure is then placed in a sintering furnace and is fired in an atmosphere of 100% hydrogen at about 525°C for about 60 minutes to sinter the metallic particles in the free standing hat-shaped porous green structure together. Sintering the metallic particles in the porous green structure forms a porous metallic filter medium having a porosity of about 70 % .

### Example 3

A slurry is formed by mixing about 1 liter DI water and 15 grams of 934 Carbopol binder in a blender. Into this slurry mixture is blended 35 grams of 1.5 micron 3-6-L stainless steel fibers. This slurry mixture is mixed in the blender until the slurry has a relatively uniform composition and the presence of pockets and/or clumps in the slurry is minimized. 148 grams of the slurry mixture is deposited in the cavity of a female mold on a 0.5 micron teflon membrane which rests, in turn, on a fine screen which rests on a coarser screen in the female mold. The inner diameter of the female mold is about 3.5 cm (1.375 inches). A piston presses the slurry until the green structure is a 0.178 cm (0.070 inch) thick disk, removing some or most of the DI water and forming a green structure. The green disk is removed from the mold and air dried at room temperature. The dried green structure is then sintered in a hydrogen atmosphere at about 982°C (1800°F) for about 30 minutes. Sintering the metallic particles in the green structure forms a porous metallic filter medium having a porosity of about 70 %.

### Example 4

A slurry is formed by mixing 17,250 grams of DI water and 260 grams of 941 Carbopol binder in a mixer. Ammonia is then added until the viscosity of the slurry mixture is approximately 7000 to 7500 CPS. Subsequently, 13,620 grams of Inco 255 nickel powder is added to the slurry mixture. This slurry mixture is mixed in the mixer until the slurry has a relatively uniform composition and the presence of pockets and/or clumps is minimized. The slurry is pored into a reverse roll coater and the gap between the rolls is set to 0.099 cm (0.039 inches). A 0.04 cm (0.0160 inch) thick porous substrate available from Pall Corporation under the trade designation PMM is directed into the reverse roll coater and the top surface of the porous substrate is coated with the slurry. The coated substrate is dried and rolled to a thickness of 0.047 cm (0.0185 inch). The rolled, coated substrated is sheared to 168 cm (66 inch) lengths and formed into a loose roll. The rolls are sintered in a sintering furnace at about 250°C for 75 minutes in a hydrogen atmosphere. The resulting filter medium comprises sintered nickel particles mechanically interlocked to the PMM substrate.

Any one or more of the features of any of the embodiments of the invention may be combined with any one or more of the features of any of the other embodiments without departing from the scope of the invention. Further, while the invention has been described in some detail by way of illustration and example, it is understood that the invention is not restricted to the specifically described embodiments in the specification.

## Claims

1. A method of forming a porous medium includes depositing a medium precursor (21) including inorganic particles into a mold cavity and is **characterized by** moving a first die (31(a), 32(b), 33(b)) against a first portion of the medium precursor (21) in the mold cavity and moving a second die (31(b), 32(a), 33(a)) against a second portion of the medium precursor (21) in the mold cavity, including moving the first and second dies (31(a), 31(b), 32(a), 32(b), 33(a) 33(b)) in the same direction or opposite directions, and sinter bonding the inorganic particles together to form a porous medium having a porosity of about 50% or more.

2. The method of claim 1 wherein the first and second dies (31(a), 31(b), 32(a), 32(b), 33(a) 33(b)) move along a common axis.

3. The method of claim 1 or 2 wherein the first and second dies (31(a), 31(b), 32(a), 32(b), 33(a) 33(b)) move in the same direction.

4. The method of any one of claims 1-3 wherein the second die (31(b), 32(a), 33(a)) moves during movement of the first die (31(a), 32(b), 33(b)).

5. The method of any one of claims 1-3 wherein the second die (31(b), 32(a), 33(a)) moves after movement of the first die.

6. The method of any one of claims 1-4 wherein the first and second dies (31(a), 31(b), 32(a), 32(b), 33(a) 33(b)) stop moving at the same time.

7. The method of any one of claims 1-6 wherein the inorganic particles remain in the mold cavity until after the first and second dies (31(a), 31(b), 32(a), 32(b), 33(a) 33(b)) have moved axially.

8. The method of any one of claims 1-7 wherein moving the first and second dies (31(a), 31(b), 32(a), 32(b), 33(a) 33(b)) includes respectively imparting predetermined characteristics to the first and second portions of the porous medium.

9. The method of any one of claims 1-8 wherein the first and second dies (31(b), 32(a), 33(a)) press the first and second portions at the same compression ratio.

10. The method of any one of claims 1-9 wherein the first and second dies (31(a), 31(b), 32(a), 32(b), 33(a) 33(b)) press the first and second portions to substantially the same particle density.

## Patentansprüche

1. Ein Verfahren zum Formen eines porösen Mediums enthält das Einbringen eines Mediumvorläufers (21), der anorganische Partikel enthält in einem Formhohlraum und ist **dadurch gekennzeichnet, dass** eine erste Form (31(a), 32(b), 33(b)) gegen einen ersten Abschnitt des Mediumvorläufers (21) in dem Formhohlraum bewegt wird und dass eine zweite Form (31(b), 32(a), 33(a)) gegen einen zweiten Abschnitt des Mediumvorläufers (21) in dem Formhohlraum bewegt wird, einschließlich des Bewegens der ersten und der zweiten Form (31(a), 31(b), 32(a), 32(b), 33(a) 33(b)) in der selben Richtung oder in entgegengesetzte Richtungen, und dass die anorganischen Partikeln durch Sinterbindung miteinander verbunden werden, um ein poröses Medium mit einer Porosität von etwa 50% oder mehr zu bilden.

2. Verfahren nach Anspruch 1, wobei die erste und die zweite Form (31(a), 31(b), 32(a), 32(b), 33(a) 33(b)) sich entlang einer gemeinsamen Achse bewegen.

3. Verfahren nach Anspruch 1 oder 2, wobei die erste und die zweite Form (31(a), 31(b), 32(a), 32(b), 33(a) 33(b)) sich in die selbe Richtung bewegen.

4. Verfahren nach irgendeinem der Ansprüche 1 bis 3, wobei die zweite Form (31(b), 32(a), 33(a)) sich während der Bewegung der ersten Form (31(a), 32(b), 33(b)) bewegt.

5. Verfahren nach irgendeinem der Ansprüche 1 bis 3, wobei sich die zweite Form (31(b), 32(a), 33(a)) nach der Bewegung der ersten Form bewegt.

6. Verfahren nach irgendeinem der Ansprüche 1 bis 4, wobei die erste und die zweite Form (31(a), 31(b), 32(a), 32(b), 33(a), 33(b)) gleichzeitig die Bewegung beenden.

7. Verfahren nach irgendeinem der Ansprüche 1 bis 6, wobei die anorganischen Partikel in dem Formhohlraum verbleiben bis nachdem sich die erste und die zweite Form (31(a), 31(b), 32(a), 32(b), 33(a), 33(b)) axial bewegt haben.

8. Verfahren nach irgendeinem der Ansprüche 1 bis 7, wobei das Bewegen der ersten und der zweiten Form (31(a), 31(b), 32(a), 32(b), 33(a), 33(b)) jeweils das Verleihen vorbestimmter Merkmale an den ersten und den zweiten Abschnitt des porösen Mediums umfasst.

9. Verfahren nach irgendeinem der Ansprüche 1 bis 8, wobei die erste und die zweite Form (31(b), 32(a), 33(a)) den ersten und den zweiten Abschnitt mit dem gleichen Verdichtungsverhältnis pressen.

10. Verfahren nach irgendeinem der Ansprüche 1 bis 9, wobei die erste und die zweite Form (31(a), 31(b), 32(a), 32(b), 33(a), 33(b)) den ersten und den zweiten Abschnitt auf im Wesentlichen die gleiche Partikeldichte pressen.

## Revendications

1. Procédé pour former un milieu poreux comprenant le dépôt d'un précurseur de milieu (21) contenant des particules inorganiques dans une cavité de moulage et **caractérisé par** le déplacement d'une première matrice (31(a), 32(b), 33(b)) contre une première partie du précurseur de milieu (21) dans la cavité de moulage, et le déplacement d'une deuxième matrice (31(b), 32(a), 33(a)) contre une deuxième partie du précurseur de milieu (21) dans la cavité de moulage, comprenant le déplacement des première et deuxième matrices (31(a), 31(b), 32(a), 32(b), 33(a), 33(b)) dans la même direction ou dans des directions opposées, et la liaison par frittage des particules inorganiques les unes aux autres pour former un milieu poreux présentant une porosité d'environ 50 %, ou plus.

2. Procédé selon la revendication 1, dans lequel les première et deuxième matrices (31(a), 31(b), 32(a), 32(b), 33(a), 33(b)) se déplacent le long d'un axe commun.

3. Procédé selon la revendication 1 ou 2, dans lequel les première et deuxième matrices (31(a), 31(b), 32(a), 32(b), 33(a), 33(b)) se déplacent dans la même direction.

4. Procédé selon l'une quelconque des revendications 1 à 3, dans lequel la deuxième matrice (31(b), 32(a), 33(a)) se déplace pendant le déplacement de la première matrice (31(a), 32(b), 33(b)).

5. Procédé selon l'une quelconque des revendications 1 à 3, dans lequel la deuxième matrice (31(b), 32(a), 33(a)) se déplace après le déplacement de la première matrice.

6. Procédé selon l'une quelconque des revendications 1 à 4, dans lequel les première et deuxième matrices (31(a), 31(b), 32(a), 32(b), 33(a), 33(b)) arrêtent de se déplacer en même temps.

7. Procédé selon l'une quelconque des revendications 1 à 6, dans lequel les particules inorganiques restent dans la cavité de moulage après que les première et deuxième matrices (31(a), 31(b), 32(a), 32(b), 33(a), 33(b)) se sont déplacées axialement.

8. Procédé selon l'une quelconque des revendications 1 à 7, dans lequel le déplacement des première et deuxième matrices (31(a), 31(b), 32(a), 32(b), 33(a), 33(b)) comprend l'application respective de caractéristiques prédéterminées aux première et deuxième parties du milieu poreux.

9. Procédé selon l'une quelconque des revendications 1 à 8, dans lequel les première et deuxième matrices (31(b), 32(a), 33(a)) pressent les première et deuxième parties au même taux de compression.

10. Procédé selon l'une quelconque des revendications 1 à 9, dans lequel les première et deuxième matrices (31(a), 31(b), 32(a), 32(b), 33(a), 33(b)) pressent les première et deuxième parties sensiblement à la même densité de particules.
